Europäisches Patentamt

European Patent Office

Office européen des brevets

(19)

(11) Veröffentlichungsnummer: **0 272 623**
**A2**

## (12) EUROPÄISCHE PATENTANMELDUNG

(21) Anmeldenummer: **87118720.9**

(22) Anmeldetag: **17.12.87**

(51) Int. Cl.⁴ **B26B 27/00**

(30) Priorität: **18.12.86 DE 8633841 U**

(43) Veröffentlichungstag der Anmeldung:
**29.06.88 Patentblatt 88/26**

(84) Benannte Vertragsstaaten:
**AT CH DE FR LI SE**

(71) Anmelder: **Fottner, Franz**
**Rosenstrasse 21**
**D-8893 Hilgertshausen-Tandern(DE)**

(72) Erfinder: **Fottner, Franz**
**Rosenstrasse 21**
**D-8893 Hilgertshausen-Tandern(DE)**

(74) Vertreter: **Freiherr von Welser, Hubert**
**Danziger Strasse 15**
**D-8000 München 40(DE)**

(54) **Scheibenwischerhobel.**

(57) Scheibenwischerhobel zum Beschneiden einer beschädigten Lippenkante des Wischerblattes eines Scheibenwischers, der einen Durchführungsschlitz für das Wischerblatt aufweist, in dem ein Messer und vorzugsweise Rollen als Führungselemente für das Wischerblatt angeordnet sind.

Fig.1

EP 0 272 623 A2

## Scheibenwischerhobel

Die Erfindung betrifft einen Scheibenwischerhobel, der dazu bestimmt ist, die beschädigte Lippenkante des Wischblattes einer Scheibenwischanlage, insbesondere einer Pendelwischanlage von Fahrzeugen um einen geringen Betrag zurückzuschneidem, um einen neuen und glatten Lippenrand zur Verfügung zu haben.

Durch an der Windschutzscheibe haftende - scharfkantige kleinste Sandkörner oder Einkristalle oder allein durch altersmäßig bedingte oberflächliche Verhärtung werden an den Lippenrändern der Wischblätter Verletzungen, feine Risse, Ausbrüche oder sonstige Rauhigkeiten verursacht. Durch sie entstehen beim Beschlagen der Windschutzscheibe mit Aerosolen, Wassertropfen oder sonstigen Verschmutzungen beim Durchfahren der Wischblätter kreisbogenförmige Schlieren oder Schmutzstreifen aus nicht abgewischtem Belag, die die Sicht durch das Blickfeld der Windschutzscheibe außerordentlich behindern können. Es bestand daher ein dringendes Bedürfnis, dieses Versagen der Wischlange durch eine einfache unmittelbar auf der Strecke durchführbare Maßnahme zu beheben und ohne Auswechseln der Wischblätter deren Funktionsfähigkeit wieder herzustellen. Das Auswechseln der Wischblätter ist auf freier Strecke und bei schlechtem Wetter meist nicht möglich und setzt voraus, daß geeignete Ersatzteile der Wischanlage mitgeführt werden, die zudem verhätnismäßig kostspielig sind. Die Möglichkeit einer Verlängerung der Lebensdauer der Wischblätter durch die Anwendung des erfindungsgemäßen Gerätes auf das Doppelte oder mehr daher sehr ins Gewicht fällt.

Aufgabe der Erfindung war demnach eine handliches, billiges, im Fahrzeug, z.B. in dessen Handschuhfach mitführbares Gerät, mit dem an ihren Kanten schadhaft gewordene Wischerblätter der Scheibenwischanlage am Fahrzeug ohne Ausbauen durch Beschneiden ihrer Wischkanten wieder vollständig funktionsfähig gemacht werden können.

Die Lösung dieser Aufgabe ergibt sich aus den Ansprüchen.

Das erfindungsgemäße Gerät hat kleine, in die Hand passende Ausmaße und kann unter allen Wetterbedingungen am Fahrzeug eingesetzt werden. Mit einem einzigen Durchziehen des Geräts an dem montierten Scheibenwischerblatt ergibt sich eine neue, glatte, vollständig gerade, ein sauberes Wischen ermöglichende Kante der Lippenränder.

Der Durchführungsschlitz für das Wischerblatt kann durchgehend das Querschnittsprofil des Wischerblattes mit einem Spiel aufweisen, wenn ein Material ausreichender Gleiteigenschaften gegenüber dem des Wischerblattes gewählt wird. Zweckmäßig ist jedoch die nachfolgend beschriebene Ausführungsform, da bei ihr nur eine rollende, vernachläßigbare Reibung zwischen Gerät und Wischerblatt stattfindet.

Ein solches Ausführungsbeispiel wird anhand der Zeichnungen im folgenden näher erläutert. Es zeigen:

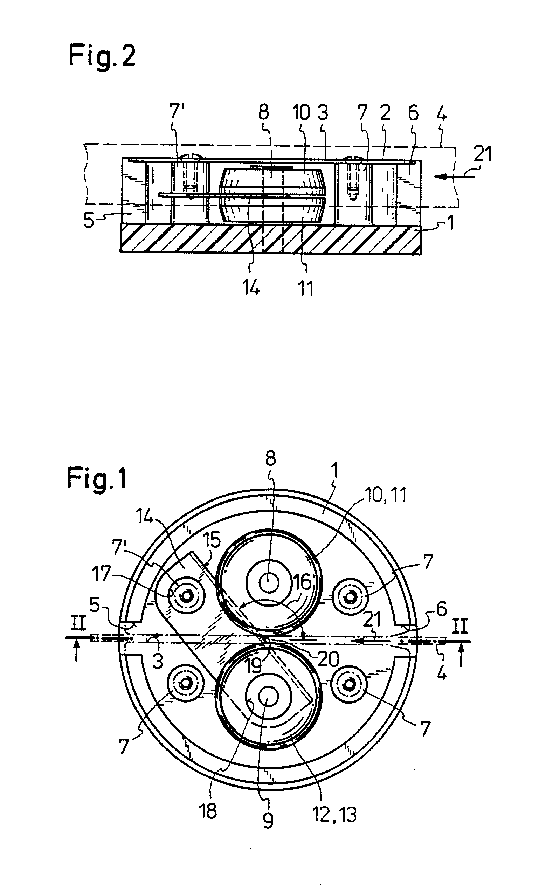

Fig. 1 eine Draufsicht auf das Gerät bei abgenommenem Deckel;

Fig. 2 einen senkrechten Schnitt in Ebene II -II in Fig. 1.

Der in den Figuren dargestellte Scheibenwischerhobel weist ein rundes topfförmiges Gehäuse 1 mit einem flachen geteilten Deckel 2 mit einem durch seine Mitte gehenden Durchführungsschlitz 3, der sich in den Seitenwänden des Gehäuses 1 bis zur Tiefe der Breite des zu beschneidenden Wischerblattes 4 bei 5 und 6 fortsetzt. Am Boden des Gehäuses 1 sind vier Zapfen 7, 7' befestigt, zweckmäßigerweise bei einem Gehäuse 1 aus Kunststoff mit angeformt, auf deren freistehenden Enden der Deckel 2 verschraubt ist, der in einen Falz des Gehäuses 1 eingreifen kann.

An dem Boden des Gehäuses 1 sind ferner zwei weitere Wellenzapfen 8 und 9 senkrecht befestigt, auf den je zwei zylindrische Rollen 10 und 11 bzw. 12 und 13 drehbar angeordnet sind, deren Umfangsflächen 14 an dem durch den Durchführungsschlitz 3 zu ziehenden Wischerblatt 4 beiderseits anlaufen. Der Radius der Rollen 10, 11, 12, 13 bestimmt sich daher nach dem halben Abstand der Mitte der Wellenzapfen 8 und 9 abzüglich der halben Breite des Wischerblattes 4. Mit Rücksicht auf die Elastizität des Wischerblattes 4 muß der Abstand der Rollen 10, 11 und 12, 13 so groß sein, daß das Wischerblatt 4 leicht durchgezogen werden kann, aber beim Schnitt durch eine gewisse Einpressung durch die Rollen 10, 11, 12, 13 einen festen Halt hat. Zwischen den Rollen 10 und 11 bzw. 12 und 13 ist ein Messerblatt 14 angeordnet, dessen Schneide 15 gegenüber dem durchzuziehenden Wischerblatt 4 einen Schnittwinkel 16 von 110° bis 120°, vorzugsweise von 115° aufweist. Das Messerblatt 14 hat die Form etwa einer Rasierklinge und die Dicke einer solchen. Es weist runde Durchbrechungen 17 und 18 aug, mit denen es mit der Durchbrechung 17 auf dem Zapfen 7' und mit der Durchbrechung 18 auf dem Wellenzapfen 9 zwischen den Rollen 10 und 11 bzw. 12 und 13 aufgesteckt ist. Die Schnittstelle 19 an der Schneide 15 liegt unmittelbar hinter der Anlaufstelle 20 der Rollen 10, 11, 12, 13 am Wischerblatt 4. Die Zugrichtung des Wischerblattes 4 ist mit dem Pfeil 21 gekennzeichnet.

Durch Auswechseln der Rollen 10, 11, 12, 13 mit solchen entsprechender Höhe kann die Lage des Schnittes am Wischerblatt 4 eingestellt werden und durch die Wahl eines entsprechenden Durchmessers der Rollen 10, 11, 12, 13 kann eine Anpassung an die Dicke des Wischerblattes 4 erfolgen.

Das Wischerblatt 4 wird, beginnend mit dem Ende, an dem es an seiner Halteleiste festgelegt ist, durch den Durchführungsschlitz 3 gezogen. Die Anordnung der Rollen und insbesondere die Anordnung der Schnittstelle 19 unmittelbar nach der Anlaufstelle 20 der Rollen 10, 11, 12, 13 an dem Wischerblatt 4 gewährleistet ein gleichmäßiges glattes Schneiden und das Erzeugen einer völlig geraden neuen Schnittkante.

Bezugszeichenverzeichnis

  1 Gehäuse
  2 Deckel
  3 Durchführungsschlitz
  4 Wischerblatt
  5, 6 Durchführungsschlitz in den Seitenwänden von 1
  7, 7' Zapfen
  8, 9 Wellenzapfen
  10, 11; 12, 13 Rollen
  14 Messerblatt
  15 Schneide
  16 Schnittwinkel
  17, 18 Durchbrechungen von 14
  19 Schnittstellt
  20 Anlaufstelle von 10 bis 13
  21 Zugrichtung

**Ansprüche**

1. Scheibenwischerhobel, der dazu bestimmt ist, die beschädigte Lippenkante des Wischblattes einer Scheibenwischanlage, insbesondere einer Pendelwischanlage von Fahrzeugen um einen geringen Betrag zurückzuschneiden, um einen neuen glatten Lippenrand zur Verfügung zu haben, dadurch gekennzeichnet, daß er einen Durchführungsschlitz für das Wischerblatt (4) aufweist, dessen Querschnitt bis auf ein Spiel gleich dem des Querschnittes des zu beschneidenden Wischerblattes (4) ist und daß in dem Durchführungsschlitz (3) quer zu seiner Tiefenerstreckung ein Messerblatt (14) in der Höhe des erwünschten Abschnittes des Wischerblattes vorgesehen ist.

2. Scheibenwischerhobel nach Anspruch 1, dadurch gekennzeichnet, daß in dem Durchführungsschlitz (3) für das Wischerblatt (4) Führungselemente (10, 11, 12, 13) für das Wischerblatt (4) vorgesehen sind.

3. Scheibenwischerhobel nach Anspruch 2, dadurch gekennzeichnet, daß die Führungselemente Rollen (10, 11, 12, 13) sind.

4. Scheibenwischerhobel nach Anspruch 3, dadurch gekennzeichnet, daß die Rollen (10, 11, 12, 13) paarweise auf Wellenzapfen (8, 9) laufen und daß zwischen je zwei auf einem Wellenzapfen gelagerten Rollen (10, 11 bzw. 12, 13) ein Messerblatt (14) angeordnet ist.

5. Scheibenwischerhobel nach Anspruch 1, 2, 3, 4, dadurch gekennzeichnet, daß der Schnittwinkel (16) der Schneide (15) des Messerblattes (14) in dessen Schnittebene zum durchzuziehenden Wischerblatt (4) 110° bis 120° vorzugsweise 115° beträgt.

6. Scheibenwischerhobel nach Anspruch 1, 2, 3, 4, 5, dadurch gekennzeichnet, daß die Rollen (10, 11, 12, 13) entsprechend der Breite des an dem Wischerblatt (4) abzutrennenden Streifens in ihrer axialen Höhe austauschbar sind.

# Fig. 2

7'  8  10 3  7  2  6  4

21

5

14  11

1

# Fig. 1

8  1  10, 11

14

15

7'  16

17

5  21

II  II

6

3  20

19

7  7

7  7

18  9  12, 13